(19) Europäisches Patentamt European Patent Office Office européen des brevets

(11) **EP 3 733 284 A1**

(12) **EUROPEAN PATENT APPLICATION**
published in accordance with Art. 153(4) EPC

(43) Date of publication:
**04.11.2020 Bulletin 2020/45**

(51) Int Cl.:
***B01J 23/04*** *(2006.01)*  ***B01J 37/02*** *(2006.01)*
***B01J 37/08*** *(2006.01)*  ***C10K 1/34*** *(2006.01)*

(21) Application number: **18897554.4**

(22) Date of filing: **16.11.2018**

(86) International application number:
**PCT/JP2018/042519**

(87) International publication number:
**WO 2019/130899 (04.07.2019 Gazette 2019/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.12.2017 JP 2017251592**

(71) Applicant: **Mitsubishi Heavy Industries Engineering, Ltd.**
**Yokohama-shi, Kanagawa 220-8401 (JP)**

(72) Inventors:
• **NOCHI, Katsumi**
  **Tokyo 108-8215 (JP)**
• **YASUTAKE, Toshinobu**
  **Tokyo 108-8215 (JP)**
• **YOSHIDA, Kaori**
  **Tokyo 108-8215 (JP)**

(74) Representative: **Studio Torta S.p.A.**
  **Via Viotti, 9**
  **10121 Torino (IT)**

(54) **CATALYST FOR USE IN HYDROLYSIS OF CARBONYL SULFIDE, AND METHOD FOR PRODUCING SAME**

(57)    Provided is a catalyst for COS hydrolysis that can improve the COS conversion rate at low temperatures, and a method of producing the same. A catalyst for COS hydrolysis including a catalyst containing titanium dioxide supporting a barium compound, and a co-catalyst, the co-catalyst being at least one selected from the group consisting of a potassium compound, a sodium compound, and a cesium compound.

FIG.2

**Description**

Technical Field

The present invention relates to a catalyst for hydrolysis of carbonyl sulfide and a method of producing the same, and it particularly relates to a catalyst for hydrolysis of carbonyl sulfide for use in fuel gas of a gas turbine and a method of producing the same. The present application claims the priority based on Japanese Patent Application No. 2017-251592 filed on December 27, 2017, entire contents of which are hereby incorporated herein.

Background Art

Typically, in gas production plants such as coal gasification plants, a method of removing sulfur compounds contained in a coal-gasified gas as a raw material gas to prevent air pollution and equipment corrosion in the plants has been performed. For example, in an integrated coal gasification combined cycle (IGCC) plant, carbonyl sulfide (COS) in coal-gasified gas is converted into hydrogen sulfide ($H_2S$) using a catalyst that hydrolyzes COS, and then the $H_2S$ in the gas is removed, thereby removing sulfur compounds from the raw material gas. The gas from which sulfur compounds have been removed is used for example as a fuel for gas turbines.

As such a catalyst and a method, a catalyst for hydrolyzing carbonyl sulfide obtained by adding a metal sulfate or a metal carbonate as a co-catalyst to be supported on anatase type titanium, and a method for hydrolyzing carbonyl sulfide in the presence of water and the catalyst in an atmosphere of a reducing gas is known (for example, Patent Document 1).

Citation List

Patent Document

Patent Document 1: JP 11-276897A

As to the catalyst, the COS conversion rate for converting COS in the raw material gas into $H_2S$ tends to increase as the operating temperature increases. However, at high temperatures, the COS conversion rate does not exceed a predetermined value based on chemical equilibrium, so that there is a possibility that the catalyst cannot be used for a raw material gas containing high concentration COS. In addition, there is a problem that a high COS conversion rate cannot be achieved at a low temperature.

Summary of Invention

In view of the above circumstances, an object of the present invention is to provide a catalyst for COS hydrolysis capable of improving the COS conversion rate at a low temperature and a method of producing the same.

An aspect of the present invention is a catalyst for COS hydrolysis. The catalyst includes a catalyst containing titanium dioxide supporting a barium compound, and a co-catalyst, the co-catalyst being at least one selected from the group consisting of a potassium compound, a sodium compound and a cesium compound.

In one aspect of the present invention, as for the catalyst for COS hydrolysis, it is preferable that the catalyst containing titanium dioxide supporting the barium compound is a molded catalyst, and the co-catalyst is supported on the molded catalyst.

In one aspect of the present invention, as for the catalyst for COS hydrolysis, it is preferable that the co-catalyst is supported in a molar ratio from 1 to 4 with respect to the barium compound.

In one aspect of the present invention, as for the catalyst for COS hydrolysis, it is preferable that the barium compound is supported in an amount of 2% by weight or greater and 8% by weight or less in terms of barium oxide with respect to the catalyst supporting the barium compound.

In one aspect of the present invention, as for the catalyst for COS hydrolysis, the co-catalyst is preferably a potassium compound.

In one aspect, the present invention is a method of producing a catalyst for COS hydrolysis. The production method includes the process of: impregnating a catalyst containing titanium dioxide supporting a barium compound with an aqueous solution containing a metal salt of a co-catalyst, drying the impregnated catalyst, and calcining the dried catalyst to allow the co-catalyst to be supported on the catalyst, where the co-catalyst is at least one selected from the group consisting of a potassium compound, a sodium compound and a cesium compound.

In one aspect of the present invention, according to the above-described method, it is preferable that the catalyst containing titanium dioxide supporting a barium compound is a molded catalyst molded using a substrate, and the co-catalyst is supported on the molded catalyst.

In one aspect of the present invention, according to the above-described method, it is preferable that the co-catalyst is supported at a molar ratio from 1 to 4 with respect to the barium compound.

In one aspect of the present invention, according to the above-described method, it is preferable that the barium compound is supported in an amount of 2% by weight or greater and 8% by weight or less in terms of barium oxide with respect to the catalyst supporting the barium compound.

In one aspect of the present invention, according to the above-described method, it is preferable that the co-catalyst is a potassium compound.

The present invention provides a catalyst for COS hydrolysis that can improve the COS conversion rate at a low temperature and a method of producing the same.

Brief Description of Drawings

FIG. 1 is a conceptual diagram for illustrating the structure and operating principle of a system for an embodiment in which the catalyst for hydrolysis of carbonyl sulfide according to the present invention is employed in an actual machine.

FIG. 2 is a graph indicating the results of the COS conversion rate with respect to the processing temperature in Examples as for the catalyst for hydrolyzing carbonyl sulfide according to the present invention and the method of producing the same.

FIG. 3 is a graph indicating the results of the relationship between the COS conversion rate and the COS concentration with respect to the processing temperature in Examples as for the catalyst for hydrolyzing carbonyl sulfide according to the present invention and the method of producing the same.

Description of Embodiments

Hereinafter, embodiments of the catalyst for hydrolysis of carbonyl sulfide (COS) and the method of producing the same according to the present invention will be described in detail while referring to the attached drawings. The present invention is not limited by the embodiments described below. The accompanying drawings are for illustrating the overview of the present embodiment, and some of the attached devices are omitted.

1. Catalyst

Embodiments of the catalyst for COS hydrolysis according to the present invention will be described. The catalyst for COS hydrolysis according to the present embodiment includes at least a first catalyst and a co-catalyst.

The first catalyst is a catalyst containing titanium dioxide ($TiO_2$) supporting a barium compound. Titanium dioxide functions as a carrier. The first catalyst is preferably a catalyst including titanium dioxide supporting a barium compound. Examples of the carrier include anatase type, rutile type, and brookite type titanium dioxide. Among these, from a practical viewpoint, the carrier is preferably an anatase type titanium dioxide. The specific surface area of the carrier may be, for example, from 30 to 300 m$^2$/g. Additionally, the carrier may be a carrier capable of supporting a barium compound, and includes aluminum oxide ($Al_2O_3$) and zirconium oxide ($ZrO_2$).

In addition, the first catalyst is preferably a molded catalyst formed by a substrate for a catalyst, and more preferably a molded catalyst having a predetermined shape. The shape of the molded catalyst is spherical, plate-like, pellet shaped, and honeycomb shaped. Among these, the shape of the molded catalyst is preferably a honeycomb shape from a practical viewpoint. Examples of the substrate for the catalyst include monolith substrates made of ceramics such as cordierite, and titanium oxide. The specific surface area of the molded catalyst may be, for example, from 30 to 300 m$^2$/g.

The amount of the barium compound may be any amount that can be supported on the carrier. For example, the amount is 1% by weight or greater, preferably 2% by weight or greater and 8% by weight or less, and preferably 2% by weight or greater and 6% by weight or less in terms of barium oxide (BaO) with respect to the first catalyst. When the amount of the barium compound is in the range of 2% by weight or greater and 8% by weight or less, the COS conversion rate can be improved by increasing the speed of converting the COS.

The co-catalyst is at least one catalyst selected from the group consisting of potassium compounds, sodium compounds and cesium compounds. Among these, the co-catalyst is preferably a potassium compound from a practical viewpoint. In addition, the above-described metal compound may be any compound that can support the metal on the carrier. However, from a practical viewpoint, each of them can be regarded as a metal oxide or a metal salt compound such as acetate, sulfate, carbonate, hydroxide, or nitrate. The co-catalyst can be supported on the first catalyst by adding its aqueous metal salt solution to the first catalyst.

The amount of the co-catalyst may be an amount greater than 0 in terms of the molar ratio with respect to the barium compound, and is preferably in the range from 1 to 4 in terms of the molar ratio with respect to barium oxide, with the barium compound converted to barium oxide. When reduced, the molar ratio of the barium compound in terms of barium oxide supported on the carrier to the co-catalyst is in the range from 1:1 to 4. When the molar ratio of barium oxide in terms of barium oxide to co-catalyst is in the range from 1:1 to 4, the COS conversion rate can be maintained at a high temperature exceeding 250°C during hydrolysis, and the COS conversion rate can be improved even at a low temperature of 250°C or lower.

Furthermore, for the amount of the co-catalyst, specifically, the amount of the potassium compound may be more than 0% by weight with respect to the first catalyst, and is preferably in the range from approximately 2.5 to 9.8% by weight in terms of potassium oxide ($K_2O$). The amount of the sodium compound may be more than 0% by weight with respect to the first catalyst, and is preferably in the range of about 1.6 to 6.5% by weight in terms of sodium oxide ($Na_2O$). The amount of the cesium compound may be more than 0% by weight with respect to the first catalyst, and is preferably in the range of about 7.4 to 29.4% by weight in terms of cesium oxide ($Cs_2O$).

2. Production method

An embodiment of the method of producing a catalyst for COS hydrolysis according to the present invention will be described. The catalyst for COS hydrolysis according to the present embodiment includes at least an impregnation process, a drying process, and a calcining process.

In the impregnation process, the first catalyst is impregnated with an aqueous solution containing a metal salt of a co-catalyst. Examples of the impregnation method include a method in which the first catalyst is immersed in a container filled with an aqueous solution of a metal salt of a co-catalyst, and a method in which the first catalyst is sprayed with an aqueous solution. After the impregnation process, it is sufficient that the above-described predetermined amount of the co-catalyst is supported on the first catalyst, and after the impregnating or spraying, the aqueous solution may be blown off if necessary. The aqueous solution of the metal salt may be any solution that can impregnate the first catalyst with the metal salt of the co-catalyst by adding it to the first catalyst. Examples of the aqueous solution of the metal salt include aqueous solutions of potassium acetate ($CH_3COOK$), sodium acetate ($CH_3COONa$), sodium hydroxide (NaOH), and cesium acetate ($CH_3COOCs$).

Furthermore, in the impregnation process, it is preferable that a molded catalyst, which is obtained by molding a catalyst containing titanium dioxide supporting a barium compound using a substrate for catalyst, is used as the first catalyst. The molded catalyst can be prepared by, for example, a kneading method or a wash coat method. Examples of the substrate for the catalyst include monolith substrates made of ceramics such as cordierite, and titanium oxide. The substrate for the catalyst is preferably a honeycomb substrate from a practical viewpoint.

In the drying process, the catalyst after the impregnation process is dried at a predetermined temperature and time. The temperature and time of the drying process may be any temperature and time that allow the catalyst after the impregnation process to be dried, and may be, for example, 110°C and 3 hours.

In the calcining process, the co-catalyst is supported on the first catalyst by calcining the catalyst after the drying process at a predetermined temperature and time. The temperature of the calcining process is, for example, 400°C or higher and 600°C or lower. The time of the calcining process is, for example, 4 hours or more and 8 hours or less.

3. System

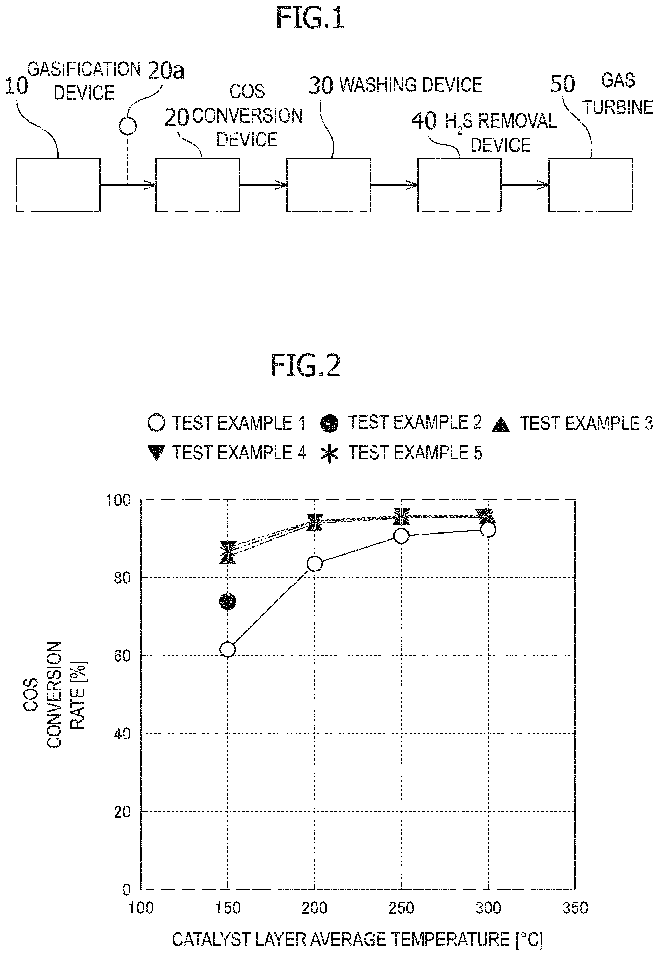

FIG. 1 illustrates a system that can suitably employ the catalyst for hydrolysis of carbonyl sulfide according to the present embodiment. According to the system illustrated in FIG. 1, using the catalyst according to the present embodiment, a fuel gas suitable for power generation by a gas turbine can be purified from a raw material gas obtained by gasifying coal.

As illustrated in FIG. 1, in a gasification device 10 such as a gasification furnace, coal is gasified under conditions where at least oxygen ($O_2$) is present, thereby forming a coal-gasified gas, which is a raw material gas. The raw material gas is sent to the COS conversion device 20 including the catalyst according to the present embodiment. In a COS conversion device 20, in the presence of the above-described catalyst, as represented by the following formula (I), COS and water ($H_2O$) in the gas are converted into carbon dioxide ($CO_2$) and hydrogen sulfide ($H_2S$). As a result, COS is decomposed and removed from the raw material gas. In the COS conversion device 20, the temperature measured by the thermometer 20a is adjusted to a low temperature of, for example, 250°C or lower.

[Chemical Formula 1]

$$COS + H_2O \leftrightarrow CO_2 + H_2S \qquad (I)$$

In addition, impurities such as halogen are mixed in the gas from which the COS has been removed. Impurities in the gas are removed by washing with water or the like in a washing device 30 such as a water wash column. In the washing device 30, water soluble ammonia ($NH_3$) mainly contained in the gas is removed by a remover such as water. The gas that has passed through the washing device 30 contacts the amine absorption liquid of an aqueous solution of an alkanolamine, such as methyldiethanolamine ($C_5H_{13}NO_2$), in the $H_2S$ removal device 40, thereby absorbing and removing $H_2S$ in the gas into the absorption liquid. In the $H_2S$ removal device 40, $CO_2$ is also removed by absorption of carbon dioxide by the amine-absorbing liquid. The gas that has passed through the $H_2S$ removal device 40 is sent to the gas turbine 50 as a purified gas. The purified gas is mixed with compressed air, which has been compressed by a compressor (not illustrated), in the gas turbine 50 and burned. As a result, a high-temperature and high-pressure combustion gas is generated. The gas turbine drives the turbine by the combustion gas and drives a power generation means (not illustrated) to generate power.

Examples

The present invention will be described in further detail hereinafter with reference to examples. The catalyst for hydrolysis of carbonyl sulfide and the method of producing the same according to the present invention are not limited by the following examples.

1.1. Preparation of catalyst I

As Test Example 1, 6 g of molded catalyst (2 × 2 cells, 150 mmL), which had a honeycomb shape and included titanium dioxide ($TiO_2$) supporting 4% by weight of barium compound in terms of barium oxide with respect to the whole catalyst, was prepared. Titanium dioxide as a carrier was anatase type titanium dioxide.

As Test Example 2, the molded catalyst of Test Example 1 was impregnated with a barium acetate (($CH_3COO)_2Ba$) aqueous solution so that the barium compound was added to the molded catalyst in an amount of 4% by weight in terms of barium oxide. The molded catalyst after impregnation with water was dried under conditions at 110°C, and then fired in air at 500°C for 3 hours, whereby 4% by weight of barium oxide with respect to the molded catalyst was supported on the molded catalyst. In Test Example 2, a catalyst containing a barium compound in an amount of 8% by weight in terms of barium oxide was prepared by adding 4% by weight of a barium compound in terms of barium oxide as a co-catalyst to the molded catalyst of Test Example 1 containing 4% by weight of a barium compound in terms of barium oxide.

As Test Example 3, a catalyst was prepared in the same manner as in Test Example 2, except that a potassium acetate ($CH_3COOK$) aqueous solution was used in place of a barium acetate aqueous solution, whereby 2.5% by weight of a potassium compound in terms of potassium oxide was supported on the molded catalyst. In Test Example 3, a catalyst containing a barium compound and a potassium compound in a molar ratio of 1:1 was prepared by adding the same molar number of the potassium compound as the barium compound as a co-catalyst to the molded catalyst of Test Example 1 containing 4% by weight of the barium compound in terms of barium oxide.

Test Example 4 was prepared in the same manner as in Test Example 3, except that the amount of the potassium acetate aqueous solution was 4.9% by weight in terms of potassium oxide with respect to the molded catalyst, In Test Example 4, a catalyst containing a barium compound and a potassium compound in a molar ratio of 1:2 was prepared by adding twice as many moles of the potassium compound as a co-catalyst to the molded catalyst of Test Example 1 containing 4% by weight of the barium compound in terms of barium oxide.

Test Example 5 was prepared in the same manner as in Test Example 3 except that the amount of the potassium acetate aqueous solution was 9.8% by weight in terms of potassium oxide with respect to the molded catalyst. In Test Example 5, a catalyst containing a barium compound and a potassium compound in a molar ratio of 1:4 was prepared by adding, as a co-catalyst, a potassium compound in an amount of 4 times the number of moles of the barium compound to the molded catalyst of Test Example 1 containing 4% by weight of a barium compound in terms of barium oxide.

As described above, in Test Examples 1 to 5, catalysts were prepared by adding, as a co-catalyst, to a barium compound or a potassium compound to the molded catalyst including a barium compound supported on titanium dioxide. Table 1 below indicates the catalyst composition and composition ratio when the barium compound is regarded as barium oxide and the potassium compound is regarded as potassium oxide. Table 1 below indicates the molar ratio of Test Example 1 to barium oxide as the composition ratio.

[Table 1]

Table 1. Catalyst composition and composition ratio

|  | Catalyst composition | Molar ratio | |
|---|---|---|---|
|  |  | BaO | $K_2O$ |
| Test Example 1 | $BaO/TiO_2$ | 1 | - |
| Test Example 2 | $BaO/TiO_2$ | 2 | - |
| Test Example 3 | $BaO-K_2O/TiO_2$ | 1 | 1 |
| Test Example 4 | $BaO-K_2O/TiO_2$ | 1 | 2 |
| Test Example 5 | $BaO-K_2O/TiO_2$ | 1 | 4 |

1.2. Measurement of COS conversion rate I

The catalysts of Test Examples 1 to 5 were subjected to a hydrolysis reaction of carbonyl sulfide at different processing temperatures. The pressure was the absolute pressure calculated from the value measured by a pressure gauge. The processing temperature was the average value of the catalyst temperatures measured at the catalyst inlet and outlet by a thermocouple (catalyst layer average temperature). The COS concentration at the catalyst outlet at each processing temperature was measured by a gas chromatograph equipped with an FPD detector. Table 2 below shows the test conditions. The COS conversion rate was determined by the following formula. In the present specification, GHSV indicates gas amount/catalyst amount. FIG. 2 indicates the results.

[Math. 1]

$$COS \text{ conversion rate (\%)} = (1 - COS \text{ concentration at catalyst outlet}/COS \text{ concentration at catalyst inlet}) \times 100)$$

[Table 2]

Table 2. Test conditions

| Pressure (MPa) | GHSV ($h^{-1}$) | Gas properties at catalyst inlet | | | | | | |
|---|---|---|---|---|---|---|---|---|
|  |  | $H_2$ (mol%) | CO (mol%) | $CO_2$ (mol%) | $H_2O$ (mol%) | $N_2$ | $H_2S$ (ppm) | COS (ppm) |
| 0.9 | 12,000 | 7.4 | 27 | 7 | 3.7 | Base | 9200 | 2300 |

As illustrated in FIG. 2, in Test Example 1, the COS conversion rate was about 62% at a processing temperature of 150°C, about 84% at 200°C, about 90% at 250°C, and about 92% at 300°C. In Test Example 2, the COS conversion rate was about 73% at 150°C. On the other hand, in Test Examples 3 to 5, the COS conversion rate was about 84 to 88% at 150°C, about 93 to 94% at 200°C, about 94 to 96% at 250°C, and about 95 to 96% at 300°C.

From the results, in Test Example 2 in which a barium compound was added, the COS conversion rate was improved only by about 11% at a low temperature of 150°C as compared with Test Example 1. On the other hand, in Test Examples 3 to 5 in which a potassium compound was added, it was found that the COS conversion rate could be improved up to about 26% at a low temperature of 250°C as compared with Test Example 1, and the COS conversion rate could be improved up to about 15% as compared with Test Example 2.

2. Preparation of catalyst II

As Test Example 6, a catalyst was prepared in the same manner as in Test Example 2, except that a sodium acetate($CH_3COONa$) aqueous solution was used in place of the barium acetate aqueous solution, whereby 1.6% by weight of a sodium compound in terms of potassium oxide ($Na_2O$) was supported on the molded catalyst. In Test Example 6, a catalyst containing a barium compound and a sodium compound in a molar ratio of 1:1 was prepared by adding, in place of the potassium compound, the same mole number of the sodium compound as the barium compound to the molded catalyst of Test Example 1 containing 4% by weight of the barium compound in terms of barium oxide.

As Test Example 7, a catalyst was prepared in the same manner as in Test Example 2, except that a cesium

acetate ($CH_3COOCs$) aqueous solution was used in place of the barium acetate aqueous solution, whereby 7.4% by weight of a cesium compound in terms of cesium oxide ($Cs_2O$) was supported on the molded catalyst. In Test Example 7, a catalyst containing a barium compound and a cesium compound in a molar ratio of 1:1 was prepared by adding, as a co-catalyst, the same mole number of the cesium compound as the barium compound in place of the potassium compound to the molded catalyst of Test Example 1 containing 4% by weight of the barium compound in terms of barium oxide, In Test Examples 6 and Test Example 7, catalysts were prepared by adding a sodium compound or a cesium compound as a co-catalyst to a molded catalyst including a barium compound supported on titanium dioxide. Table 3 below shows the catalyst composition and composition ratio. Table 3 below shows the molar ratio to barium oxide in Test Example 1 as the composition ratio.

[Table 3]

Table 3. Catalyst composition and composition ratio

|  | Catalyst composition | Molar ratio | | | |
|---|---|---|---|---|---|
|  |  | BaO | $K_2O$ | $Na_2O$ | $Cs_2O$ |
| Test Example 1 | $BaO/TiO_2$ | 1 | - | - | - |
| Test Example 3 | $BaO-K_2O/TiO_2$ | 1 | 1 | - | - |
| Test Example 6 | $BaO-Na_2O/TiO_2$ | 1 | - | 1 | - |
| Test Example 7 | $BaO-Cs_2O/TiO_2$ | 1 | - | - | 1 |

2.1. Measurement of COS conversion rate II

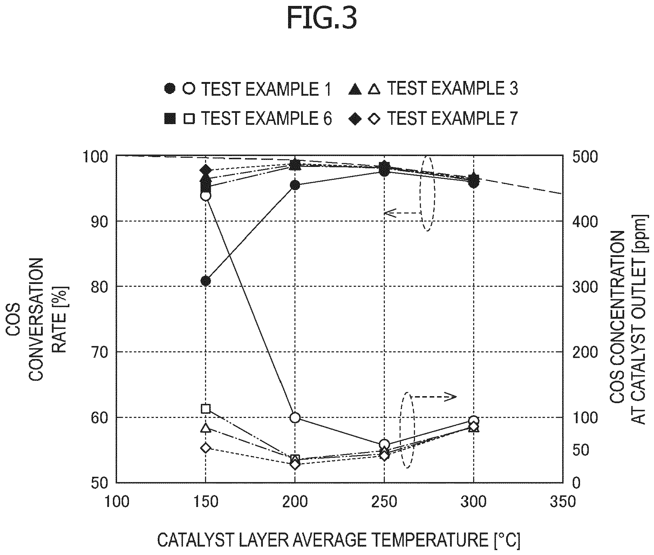

The hydrolysis reaction of the carbonyl sulfide was performed on the catalysts of Test Example 1, Test Example 3, Test Example 6, and Test Example 7. Table 4 below indicates the test conditions. The processing temperature, the COS conversion rate, and the COS concentration at the catalyst outlet at each processing temperature were measured in the same manner as described above. FIG. 3 indicates the results. In the figure, the chemical equilibrium curve is indicated by a dotted line.

[Table 4]

Table 4. Test conditions

| Pressure (MPa) | GHSV ($h^{-1}$) | Gas properties at catalyst inlet | | | | | | |
|---|---|---|---|---|---|---|---|---|
|  |  | $H_2$ (mol%) | CO (mol%) | $CO_2$ (mol%) | $H_2O$ (mol%) | $N_2$ | $H_2S$ (ppm) | COS (ppm) |
| 0.9 | 6000 | 7.4 | 27 | 7 | 3.7 | Base | 9200 | 2300 |

As indicated in FIG. 3, in Test Example 1, the COS conversion rate was about 81% at a processing temperature of 150°C, about 96% at 200°C, about 97% at 250°C, and about 96% at 300°C. On the other hand, in Test Example 3, Test Example 6, and Test Example 7, the COS conversion rate was about 95 to 97% at 150°C, about 99% at 200°C, about 98% at 250°C, and about 96% at 300°C. At processing temperatures exceeding 250°C, the COS addition rates of all the test examples became values approaching the equilibrium curve.

In addition, in Test Example 1, the COS concentration decreased from 2300 ppm to about 440 ppm at a processing temperature of 150°C, about 100 ppm at 200°C, about 60 ppm at 250°C, and about 97 ppm at 300°C. On the other hand, in Test Example 3, Test Example 6, and Test Example 7, the COS concentration decreased from 2300 ppm to about 50 to 110 ppm at 150°C, about 25 to 32 ppm at 200°C, about 35 to 50 ppm at 250°C, and about 87 to 95 ppm at 300°C.

From the results, in Test Example 3, Test Example 6, and Test Example 7 in which a potassium compound, a sodium compound, or a cesium compound was added, it was found that the COS conversion rate was improved by up to about 26% as compared with Test Example 1 at a low temperature of 250°C or lower. Furthermore, in Test Example 3, Test Example 6, and Test Example 7 in which a potassium compound, a sodium compound, or a cesium compound was added, it was found that the COS concentration could be reduced from 2300 ppm to a minimum of about 25 ppm even at a low temperature of 250°C or lower.

Industrial Applicability

The catalyst for COS hydrolysis and the method of producing the same according to the present invention can improve COS conversion rate at low temperatures.

Reference Signs List

10    Gasification device
20    COS conversion device
20a   Thermometer
30    Washing device
40    $H_2S$ removal device
50    Gas turbine

**Claims**

1. A catalyst for COS hydrolysis comprising:

   a catalyst containing titanium dioxide supporting a barium compound; and
   a co-catalyst,
   wherein the co-catalyst is at least one selected from the group consisting of a potassium compound, a sodium compound, and a cesium compound.

2. The catalyst for COS hydrolysis according to claim 1, wherein the catalyst containing titanium dioxide supporting the barium compound is a molded catalyst, and the co-catalyst is supported on the molded catalyst.

3. The catalyst for COS hydrolysis according to claim 1 or 2, wherein the co-catalyst is supported in a molar ratio from 1 to 4 with respect to the barium compound.

4. The catalyst for COS hydrolysis according to any one of claims 1 to 3, wherein the barium compound is supported in an amount of 2% by weight or greater and 8% by weight or less in terms of barium oxide with respect to the catalyst supporting the barium compound.

5. The catalyst for COS hydrolysis according to any one of claims 1 to 4, wherein the co-catalyst is a potassium compound.

6. A method of producing a catalyst for COS hydrolysis, the method comprising the steps of:

   impregnating a catalyst containing titanium dioxide supporting a barium compound with an aqueous solution containing a metal salt of a co-catalyst;
   drying the impregnated catalyst; and
   calcining the dried catalyst to allow the co-catalyst to be supported on the catalyst,
   wherein the co-catalyst is at least one selected from the group consisting of a potassium compound, a sodium compound, and a cesium compound.

7. The method of producing a catalyst for COS hydrolysis according to claim 6, wherein the catalyst containing titanium dioxide supporting the barium compound is used as a molded catalyst, and the co-catalyst is supported on the molded catalyst.

8. The method of producing a catalyst for COS hydrolysis according to claim 6 or 7, wherein the co-catalyst is supported in a molar ratio from 1 to 4 with respect to the barium compound.

9. The method of producing a catalyst for COS hydrolysis according to any one of claims 6 to 8, wherein the barium compound is supported in an amount of 2% by weight or greater and 8% by weight or less in terms of barium oxide with respect to the catalyst supporting the barium compound.

10. The method of producing a catalyst for COS hydrolysis according to any one of claims 6 to 9, wherein the co-catalyst is a potassium compound.


**Amended claims under Art. 19.1 PCT**

1. [Amended] A catalyst for COS hydrolysis comprising:

   a catalyst containing titanium dioxide supporting a barium compound; and
   a co-catalyst,
   wherein the catalyst containing titanium dioxide supporting a barium compound is a molded catalyst comprising a honeycomb substrate, and
   the co-catalyst is at least one selected from the group consisting of a potassium compound, a sodium compound, and a cesium compound.

2. [Amended] The catalyst for COS hydrolysis according to claim 1, wherein the co-catalyst is supported on the molded catalyst.

3. The catalyst for COS hydrolysis according to claim 1 or 2, wherein the co-catalyst is supported in a molar ratio from 1 to 4 with respect to the barium compound.

4. The catalyst for COS hydrolysis according to any one of claims 1 to 3, wherein the barium compound is supported in an amount of 2% by weight or greater and 8% by weight or less in terms of barium oxide with respect to the catalyst supporting the barium compound.

5. The catalyst for COS hydrolysis according to any one of claims 1 to 4, wherein the co-catalyst is a potassium compound.

6. [Amended] A method of producing a catalyst for COS hydrolysis, the method comprising the steps of:

   impregnating a catalyst containing titanium dioxide supporting a barium compound with an aqueous solution containing a metal salt of a co-catalyst;
   drying the impregnated catalyst; and
   calcining the dried catalyst to allow the co-catalyst to be supported on the catalyst,
   wherein the catalyst containing titanium dioxide supporting a barium compound is a molded catalyst comprising a honeycomb substrate, and
   the co-catalyst is at least one selected from the group consisting of a potassium compound, a sodium compound, and a cesium compound.

7. [Amended] The method of producing a catalyst for COS hydrolysis according to claim 6, wherein the co-catalyst is supported on the molded catalyst.

8. The method of producing a catalyst for COS hydrolysis according to claim 6 or 7, wherein the co-catalyst is supported in a molar ratio of 1 to 4 with respect to the barium compound.

9. The method of producing a catalyst for COS hydrolysis according to any one of claims 6 to 8, wherein the barium compound is supported in an amount of 2% by weight or greater and 8% by weight or less in terms of barium oxide with respect to the catalyst supporting the barium compound.

10. The method of producing a catalyst for COS hydrolysis according to any one of claims 6 to 9, wherein the co-catalyst is a potassium compound.

# FIG.1

# FIG.2

○ TEST EXAMPLE 1  ● TEST EXAMPLE 2  ▲ TEST EXAMPLE 3
▼ TEST EXAMPLE 4  ✳ TEST EXAMPLE 5

# FIG.3

● ○ TEST EXAMPLE 1   ▲ △ TEST EXAMPLE 3

■ □ TEST EXAMPLE 6   ◆ ◇ TEST EXAMPLE 7

## INTERNATIONAL SEARCH REPORT

| International application No. |
|---|
| PCT/JP2018/042519 |

**A. CLASSIFICATION OF SUBJECT MATTER**
Int.Cl. B01J23/04(2006.01)i, B01J37/02(2006.01)i, B01J37/08(2006.01)i,
C10K1/34(2006.01)i

According to International Patent Classification (IPC) or to both national classification and IPC

**B. FIELDS SEARCHED**

Minimum documentation searched (classification system followed by classification symbols)
Int.Cl. B01J23/04, B01J37/02, B01J37/08, C10K1/34

Documentation searched other than minimum documentation to the extent that such documents are included in the fields searched
Published examined utility model applications of Japan      1922–1996
Published unexamined utility model applications of Japan    1971–2019
Registered utility model specifications of Japan            1996–2019
Published registered utility model applications of Japan    1994–2019

Electronic data base consulted during the international search (name of data base and, where practicable, search terms used)
CAplus/REGISTRY(STN), JSTPlus/JST7580/JSTChina(JDreamIII)

**C. DOCUMENTS CONSIDERED TO BE RELEVANT**

| Category* | Citation of document, with indication, where appropriate, of the relevant passages | Relevant to claim No. |
|---|---|---|
| X | CN 102179241 A (SANLONG CATALYST CO., LTD.) 14 September 2011, paragraphs [0053]–[0060], [0064]–[0071], examples 10, 11, 13, 14 (Family: none) | 1–10 |
| X | CN 101239319 A (CHINA UNIVERSITY OF PETROLEUM, BEIJING) 13 August 2008, claim 1, page 6, line 6 to page 8, line 5, page 14, line 19 to page 16, line 1, examples 11, 12 (Family: none) | 1–10 |
| Y | | 1–10 |

☒ Further documents are listed in the continuation of Box C.      ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15.01.2019 | 29.01.2019 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

INTERNATIONAL SEARCH REPORT

**EP 3 733 284 A1**

| | International application No. |
|---|---|
| | PCT/JP2018/042519 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 58-210848 A (CATALYSTS AND CHEM IND CO., LTD.) 08 December 1983, claim 1, page 2, upper left column, line 19 to upper right column, line 1, tables I, II, III (Family: none) | 1-10 |
| Y | US 4511668 A (CATALYSTS & CHEMICALS INDUSTRIES CO., LTD.) 16 April 1985, claims 1-3, column 2, lines 17-21, tables I, II, III & CA 1216838 A | 1-10 |
| A | JP 6-218230 A (KRONOS TITAN GMBH) 09 August 1994, claims 1, 3, paragraphs [0011], [0015], [0019] & US 5942201 A, claims 1, 2, column 2, lines 44-54, column 3, lines 15-23, column 4, lines 15-23 & EP 559010 A2 | 1-10 |
| A | JP 2000-516530 A (SHELL INT RESEARCH MIJ BV) 12 December 2000, claims 1, 6, page 9, line 13 to page 10, line 6 & WO 1998/007502 A1, claims 1, 6, page 8, line 16 to page 9, line 13 & CN 1230134 A & KR 10-0492701 B1 | 1-10 |

Form PCT/ISA/210 (continuation of second sheet) (January 2015)

13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017251592 A
- JP 11276897 A